(19) Europäisches Patentamt
European Patent Office
Office européen des brevets

(11) **EP 3 806 006 A1**

(12) **EUROPEAN PATENT APPLICATION**

(43) Date of publication:
**14.04.2021 Bulletin 2021/15**

(51) Int Cl.:
**G06Q 10/04** *(2012.01)*      **G06Q 50/30** *(2012.01)*

(21) Application number: **19201659.0**

(22) Date of filing: **07.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventor: **Syed, Arslan Ali**
**80937 München (DE)**

(54) **COMPUTER-IMPLEMENTED METHOD, COMPUTER PROGRAM AND SYSTEM FOR ASSIGNING A PLURALITY OF RIDE REQUESTS TO A PLURALITY OF VEHICLES**

(57)    Embodiments of the present disclosure relate to a computer-implemented method, a computer program and a system for assigning a plurality of ride requests to a plurality of vehicles. The method comprises receiving ride requests of the plurality of ride requests in a continuous manner. The method comprises accumulating the ride requests that were received in a first time period. The method comprises assigning the ride requests that were received in the first time period to the plurality of vehicles using a rough heuristic. The method comprises executing a metaheuristic iterative improvement algorithm to reassign ride requests that were received in a second time period to the plurality of vehicles. The second time period comprises the first time period. The second time period is longer than the first time period. The method comprises repeating the assignment for a subsequent first time period.

RECEIVING RIDE REQUESTS — 110

ACCUMULATING THE RIDE REQUESTS — 120

ASSIGNING THE RIDE REQUESTS — 130

EXECUTING A METAHEURISTIC IMPROVEMENT ALGORITHM — 140

REPATING THE ASSIGNMENT — 150

Fig. 1a

**Description**

**Field**

Embodiments of the present disclosure relate to a computer-implemented method, a computer program and a system for assigning a plurality of ride requests to a plurality of vehicles.

**Background**

With the availability of smartphones and high speed internet, there has been an exponential increase in the research into new On Demand Mobility (ODM) applications. Among various ODM applications, Ride Sharing (RS) and Ride Hailing (RH) have become the most commonly known. In ride hailing services, the user requests a vehicle for a trip from pickup to dropoff locations. A single vehicle is only allowed serve a single customer at a time. Ride sharing is a general case of ride hailing, where a single vehicle can combine multiple customers in a trip. The research into ride hailing and ride sharing services has caused a resurgence of research interests into the Dial a Ride Problem (DARP), as shown by Ho et al in "A survey of dial-a-ride problems: Literature review and recent developments," (2018). The Dial a Ride Problem is a special case of pickup and delivery problem with time windows, where both customer convenience and business goals are considered. It may be considered to be closely related to the problem of matching vehicles to the customer requests in ride hailing and ride sharing services. The major difference is that in DARP, the vehicles start and end at fixed depots while in ride hailing each vehicle has its own start and end locations. Therefore, to adopt DARP for the vehicle matching problem, each vehicle can be thought of having its own unique start depot, which drastically increases the problem complexity.

**Summary**

There may be a desire for an improved approach for method for assigning a plurality of ride requests to a plurality of vehicles.

This desire is addressed by the subject-matter of the independent claims.

Embodiments of the present disclosure provide a computer-implemented method for assigning a plurality of ride requests to a plurality of vehicles. The method comprises receiving ride requests of the plurality of ride requests in a continuous manner. The method comprises accumulating the ride requests that were received in a first time period. The method comprises assigning the ride requests that were received in the first time period to the plurality of vehicles using a rough heuristic. The method comprises executing a metaheuristic iterative improvement algorithm to reassign ride requests that were received in a second time period to the plurality of vehicles. The second time period comprises the first time period. The second time period is longer than the first time period. The method comprises repeating the assignment for a subsequent first time period.

By using a two-step processor for assigning ride requests for vehicles, an initial delay in the assignment is reduced, while an overall efficiency of the assignment is improved, as the initially assigned ride requests can be reassigned according to the metaheuristic.

In at least some embodiments, the metaheuristic iterative improvement algorithm is based on reassigning ride requests that were received in the second time period to the plurality of vehicles based on an objective evaluation function. The objective evaluation function may be used to evaluate the assignments, i.e. in order to compare different combinations of assignments.

For example, the objective evaluation function may be based on at least one of a mean vehicle total travel time, a mean delay per assigned ride request and a percentage of unassigned ride requests. These metrics are metrics that may be relevant in determining which combination of assignments is objectively superior.

In various embodiments, executing the metaheuristic iterative improvement algorithm comprises generating a plurality of solutions by repeatedly generating a new solution by adding and removing ride requests to and from a previous solution. Executing the iterative improvement algorithm may comprise evaluating the plurality of solutions based on an objective evaluation function. The reassignment of the ride requests may be performed by choosing a solution of the plurality of solutions based on the evaluation of the plurality of solutions. By removing and adding ride requests, different solutions may be generated, that may lead to an improved solution to be used for the assignments. For example, the metaheuristic iterative improvement algorithm may be based on the Adaptive Large Neighborhood Search (ALNS) algorithm, which is based on temporarily removing ride requests. In other words, the metaheuristic iterative improvement algorithm may be based on an adaptive large neighborhood search.

In some embodiments, the metaheuristic iterative improvement algorithm iterates a pre-defined number of times during an execution of the metaheuristic iterative improvement algorithm. By using a pre-defined number of iterations, an execution time of the algorithm may be deterministic.

In at least some embodiments, the method comprises storing one or more ride requests that have been removed from the chosen solution. The chosen solution may be used as an initial solution for a subsequent execution of the metaheuristic iterative improvement algorithm. Ride requests that were received in the subsequent first time period may be added together with the one or more ride requests that have been removed from the chosen solution to the initial solution in the subsequent execution of the metaheuristic iterative improvement algorithm. This may enable an adaptation of the ALNS to a scenario in which the ride requests are continuously added.

For example, the first time period may be at most 10 seconds long. Additionally or alternatively, the second time period may be more than 10 seconds long. A first time period of at most 10 seconds may lead to a short delay in the initial assignment. A longer second time period may result in more time for improving the assignment. For example, a duration of the second time period may be a multiple of a duration of the first time period. This may facilitate a synchronization of the first and second time period.

In some embodiments, the first time period and the second time period may be relative to a current time. Additionally or alternatively, the first time period and the second time period may be rolling time windows. In other words, the first and second time intervals may be continuously readjusted, e.g. to iteratively assign newly arrived requests to vehicles.

For example, an assignment of a received ride request is fixed after the second time period. If the ride request is fixed, the assignment might not be reconsidered, reducing a number of possible solutions.

In various embodiments, one or more ride requests received before the first time period and within the second time period are available for reassignment in the execution of the metaheuristic iterative improvement algorithm. In other words, even ride requests received before the first time interval may be reassigned, which may lead to an improved solution.

Some embodiments relate to ride hailing. Accordingly, the plurality of ride requests may be a plurality of ride requests of a ride hailing system. The plurality of vehicles may be a plurality of ride hailing vehicles. Alternatively, embodiments may relate to ride sharing. Accordingly, the plurality of ride requests may be a plurality of ride requests of a ride sharing system. The plurality of vehicles may be a plurality of ride sharing vehicles. Embodiments may be used in both ride sharing and ride hailing systems.

Embodiments further provide a computer program having a program code for performing the method, when the computer program is executed on a computer, a processor, or a programmable hardware component.

Embodiments further provide a system comprising one or more interfaces and one or more processing modules. The system is configured to receive ride requests of the plurality of ride requests via the one or more interfaces in a continuous manner. The system is configured to accumulate the ride requests that were received in a first time period. The system is configured to assign the ride requests that were received in the first time period to the plurality of vehicles using a rough heuristic. The system is configured to execute a metaheuristic iterative improvement algorithm to reassign ride requests that were received in a second time period to the plurality of vehicles. The second time period comprises the first time period and wherein the second time period is longer than the first time period. The system is configured to repeat the assignment for a subsequent first time period.

**Brief description of the Figures**

Some examples of apparatuses and/or methods will be described in the following by way of example only, and with reference to the accompanying figures, in which

Figs. 1a and 1b relate to flow charts of embodiments of a computer-implemented method for assigning a plurality of ride requests to a plurality of vehicles;

Fig. 1c relates to a block diagram of an embodiment of a system for assigning a plurality of ride requests to a plurality of vehicles;

Fig. 2a shows a schematic diagram of a static assignment of rides to vehicles in ride hailing;

Fig. 2b shows a schematic diagram of a dynamic assignment of rides to vehicles in ride hailing;

Figs. 3a and 3b show schematic overviews of setups used for a simulation of some embodiments;

Fig. 4 shows an example of an application of the Adaptive Large Neighborhood Search; and

Fig. 5 shows a schematic overview of an absolute and an effective batching period.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

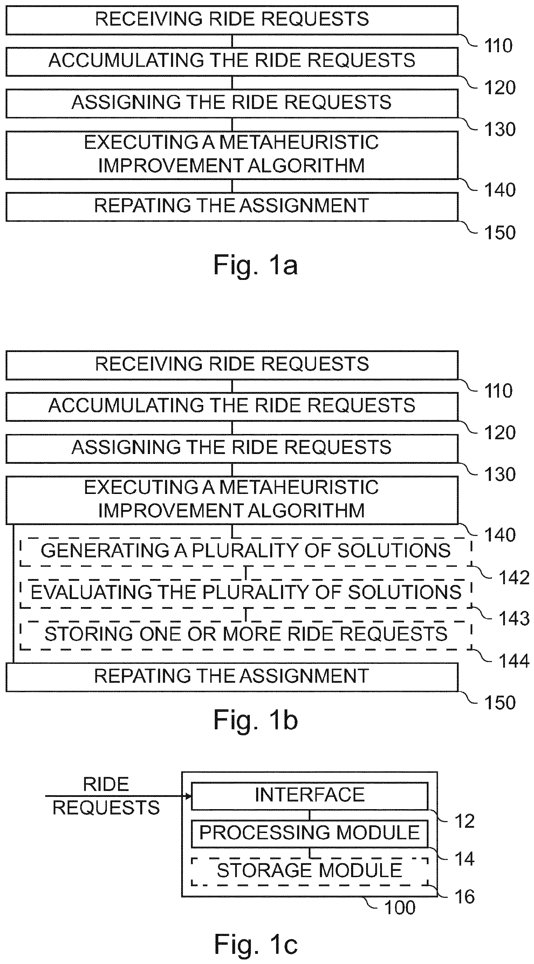

Figs. 1a and 1b relate to flow charts of embodiments of a computer-implemented method for assigning a plurality of ride requests to a plurality of vehicles. The method comprises receiving 110 ride requests of the plurality of ride requests in a continuous manner. The method comprises accumulating 120 the ride requests that were received in a first time period. The method comprises assigning 130 the ride requests that were received in the first time period to the plurality of vehicles using a rough heuristic. The method comprises executing 140 a metaheuristic iterative improvement algorithm to reassign ride requests that were received in a second time period to the plurality of vehicles. The second time period comprises the first time period. The second time period is longer than the first time period. The method comprises repeating 150 the assignment for a subsequent first time period. For example, the method may be executed by a computer system, e.g. the system shown in connection with Fig. 1c.

Fig. 1c relates to a block diagram of an embodiment of a corresponding system 100 for assigning a plurality of ride requests to a plurality of vehicles. The system 100 comprises one or more interfaces 12 and one or more processing modules 14 that are coupled to the one or more interfaces. The system 100 may optionally comprise one or more storage modules 16 that are also coupled to the one or more processing modules 16. In general, the processing module 14 may be configured to perform the functionality of the system (i.e. the method of Figs. 1a and/or 1b), in conjunction with the one or more interfaces 12 and/or the one or more storage modules 16. The system 100, e.g. the processing module 14, is configured to receive the ride requests of the plurality of ride requests via the one or more interfaces in a continuous manner. The system 100, e.g. the processing module 14, is configured to accumulate the ride requests that were received in a first time period (e.g. in a storage module 16). The system 100 (e.g. the processing module 14) is configured to assign the ride requests that were received in the first time period to the plurality of vehicles using the rough heuristic. The system 100 (e.g. the processing module 14) is configured to execute the metaheuristic iterative improvement algorithm to reassign ride requests that were received in a second time period to the plurality of vehicles. The system 100 (e.g. the processing module 14) is configured to repeat the assignment for a subsequent first time period.

The following description relates both to the computer-implemented method of Figs. 1a and/or 1b and to the corresponding system 100 of Fig. 1c.

Embodiments of the present disclosure relate to the assignment of ride requests to vehicles in an On-Demand-Mobility (ODM) scenario. In an ODM scenario, customers request to be transported by a vehicle of a service provider, e.g. by having their respective mobile devices transmit a corresponding ride requests. As ODM systems are often built for scale, a manual assignment between ride requests and available vehicles is often not possible. Moreover, as the vehicles move around (with a non-deterministic arrival time) and the ride requests continuously arrive, the assignment between ride requests is a dynamic problem, that is usually approached using a computer system that matches ride requests to available vehicles. In ODM scenarios, at least two services are distinguished: Ride hailing services and ride sharing services. In a ride hailing system, a user/customer requests a ride on a vehicle for one or more passengers, the ride being exclusive to the one or more passengers. In a ride sharing system, a user/customer also requests a ride on a vehicle for one or more passengers, but the ride may be shared with one or more further passengers.

The method comprises receiving 110 the ride requests (or short "requests") of the plurality of ride requests in a continuous manner. In general, a ride request may be a request, made by a user/customer, received in digital form, to book a ride on a vehicle of the plurality of vehicles. If embodiments relate to a ride hailing system, a ride request may be a request for booking an exclusive ride on a vehicle of the plurality of vehicles. Accordingly, the plurality of ride requests may be a plurality of ride requests of a ride hailing system. The plurality of vehicles may be a plurality of ride hailing vehicles (i.e. a plurality of vehicles operating in the ride hailing system). Alternatively, embodiments relate to a ride sharing system. In this case, a ride request may be a request for booking a ride on a vehicle of the plurality of the plurality of vehicles, with the ride being open for being shared with other users/customers. Accordingly, the plurality of ride requests may be a plurality of ride requests of a ride sharing system. The plurality of vehicles may be a plurality of ride sharing vehicles. For example, the ride requests may be received via a communication system, e.g. from one or more devices of customers submitting the ride requests.

The ride requests are received in a continuous manner. In other words, the ride requests may be received (quasi-independent of each other) over time, e.g. as they are submitted by the respective users/customers. For example, the ride requests might not be received in accumulated form, e.g. already batched together for a pre-defined period of time. On the contrary, the ride requests may be received such, that at least a first of the ride requests is received before (e.g. at least one second before) a second of the ride requests.

The method comprises accumulating 120 (i.e. temporarily storing, e.g. in the one or more storage modules) the ride requests that were received in the first time period. For example, the ride requests that were received in the first time period may be collected, and subsequently processed together (e.g. by using the rough heuristic for the assignment).

The method comprises assigning 130 the ride requests that were received in the first time period to the plurality of vehicles using the rough heuristic. In at least some embodiments, the rough heuristic may be differentiated from the metaheuristic iterative improvement algorithm by the time (e.g. the number of iterations) used for executing the algorithm: As the first time interval is shorter than the second time interval, less time may be available for performing the assignment 130 using the rough heuristic.

In some embodiments, two different algorithms may be used for the initial assignment (i.e. the rough heuristic) and for the subsequent reassignment. For example, a greedy algorithm, such as a nearest neighbor heuristic may be used as rough heuristic, and a more complex algorithm, such as an adaptive large neighborhood search may be used as metaheuristic iterative improvement algorithm. Alternatively, both the rough heuristic and the a metaheuristic iterative improvement algorithm may use the same algorithm (e.g. an adaptive large neighborhood search-based algorithm), such that the received ride requests are (initially) assigned when the accumulated ride requests of the first time interval are initially fed into the metaheuristic iterative improvement algorithm, and reassigned when the ride requests are processed using the metaheuristic iterative improvement algorithm during the second time interval. In these cases, the rough heuristic may be the initial assignment performed by the metaheuristic iterative improvement algorithm. For example, if the metaheuristic iterative improvement algorithm is based on an adaptive large neighborhood search, the rough heuristic may also be based on an adaptive large neighborhood search.

To speed up the assignment process, ride requests that are assigned to unoccupied (i.e. empty) vehicles by the rough heuristic might not be reassigned by the metaheuristic iterative improvement algorithm. In other words, ride requests that are assigned to unoccupied vehicles by the rough heuristic may be fixed after the initial assignment, i.e. unchangeable by the ride requests that are assigned to unoccupied (i.e. empty) vehicles by the rough heuristic.

In at least some embodiments, application-specific data structures may be used to model the relationship between the plurality of ride requests and the plurality of vehicles. For example, as shown in more detail later, the plurality of ride requests and the plurality of vehicles may be stored within a pairwise request vehicle graph. The assignment of the ride requests to the vehicles may also be based on the ride requests and the vehicles stored within the pairwise request vehicle graph. In some embodiments, the assignments may be modeled within the pairwise request vehicle graph.

The method comprises executing 140 the metaheuristic iterative improvement algorithm to reassign ride requests that were received in a second time period to the plurality of vehicles. For example, the metaheuristic iterative improvement algorithm may be a metaheuristic optimization algorithm. In this context, the term "optimization" is not to be understood as meaning an algorithm that necessarily determines an optimal solution, but rather as an algorithm that is aimed at determining an improved solution that approaches the optimal solution (but not necessarily reaches it, e.g. due to computational constraints). The term "iterative improvement algorithm" denotes that, over a plurality of iterations, an improved solution to a problem is determined. The term "metaheuristic iterative improvement algorithm" may also denote that the algorithm uses a heuristic (i.e. the metaheuristic) to improve on an initial solution provided by the rough heuristic. In this context, a solution may be defined a combination of assignments between the plurality of ride requests and the plurality of vehicles. A first solution (i.e. combination of assignments) may be better or improved compared to a second solution (i.e. combination of assignments) if a result of an objective evaluation function (i.e. a function to objectively evaluate a quality of a solution) is better for the first solution than for the second solution.

In at least some embodiments, the metaheuristic iterative improvement algorithm is based on reassigning ride requests that were received in the second time period to the plurality of vehicles based on an objective evaluation function. As written above, the objective evaluation function may be used to evaluate a quality of two different solutions (i.e. combinations of assignments) generated by the metaheuristic iterative improvement algorithm. For example, the objective evaluation function may be based on (i.e. comprise as one or more factors) at least one of a mean vehicle total travel time, a mean delay per assigned ride request and a percentage of unassigned ride requests. The different factors of the objective evaluation function may be weighted by one or more weighting factors, which may depend on whether the travel time, the delay or the percentage of unassigned ride requests are prioritized.

In at least some embodiments, the metaheuristic iterative improvement algorithm is based on an adaptive large neighborhood search, which is based on iteratively adding and removing requests to and from a previous solution. Accordingly, executing 140 the metaheuristic iterative improvement algorithm may comprise generating 142 a plurality of solutions by repeatedly generating a new solution by adding and removing ride requests to and from a previous solution. For example, in each execution of the metaheuristic iterative improvement algorithm, a plurality of solutions may be generated, e.g. in an iterative manner. In other words, in each execution of the metaheuristic iterative improvement algorithm, a plurality of iterations of the metaheuristic iterative improvement algorithm may be performed, generating the plurality of solutions. The number of iterations may be limited by the second time interval. In more general terms, the number of iterations may be set to a pre-defined number, which may in turn be based on the second time interval. In other words, the metaheuristic iterative improvement algorithm may iterates a pre-defined number of times during an execution of the metaheuristic iterative improvement algorithm. Each of the plurality of solutions may be (subtly) different from a previous solution of the plurality of solutions. The plurality of solutions may start from an initial solution, which may correspond to a (last) solution determined in a previous execution of the metaheuristic iterative improvement algorithm. Starting from the initial solution, the solution may be iteratively changed (i.e. tweaked), e.g. by adding and removing ride requests to and from a previous solution, and compared with the previous solution (or the previous solutions), based on the objective evaluation function. Executing 140 the metaheuristic iterative improvement algorithm may further comprise evaluating 144 the plurality of solutions based on the objective evaluation function. In other words, executing 140 the metaheuristic iterative improvement algorithm may comprise calculating a result of the objective evaluation function for (all of) the plurality of solutions, e.g. in each iteration or at the end of the plurality of iterations. The result of the objective evaluation function may be used to choose a solution.

For example, adding and removing ride requests to and from a previous solution may be based on one or more of the following approaches:

1) Basic Greedy Insertion: The greedy heuristic tries to insert the ride request at the position that would increase the overall objective cost the least.
2) K-Regret Insertion: K-Regret heuristic may try to insert the ride request that would be regretted most if not inserted in the current iteration.
3) Worst Removal: From the group of ride requests that are present in the solution, the worst removal may remove the request that remove the "worst" request from the solution.
4) Shaw Removal: The shaw removal may try to remove the ride requests that are similar. More similar requests may result in higher chances that they could be easily shuffled, leading to new, and possibly, better solutions.
5) Random Removal: Random removal may simply remove the intended number of ride requests from the solution randomly.

When ride requests are removed from a solution, the removed ride requests may be collected to be reinserted at a later stage. The same mechanism may be used to insert the accumulated ride requests of the first time interval. In other words, the method may comprise storing 146 one or more ride requests that have been removed from the chosen solution (and/or from a previous solution of the plurality of solutions). Ride requests that were received in the subsequent first time period are added together with the one or more ride requests that have been removed from the chosen solution to the initial solution in the subsequent execution of the metaheuristic iterative improvement algorithm.

The reassignment of the ride requests is performed by choosing a solution of the plurality of solutions based on the evaluation of the plurality of solutions. For example, the best solution (or one of the best solutions according to the objective evaluation function) for the reassignment. Subsequently, the reassignment may be performed based on the chosen solution. Additionally, the chosen solution may be used as an initial solution for a subsequent execution of the metaheuristic iterative improvement algorithm.

The second time period comprises the first time period. Furthermore, the second time period is longer than the first time period. For example, the first time period may be at most 10 seconds long, e.g. 10 seconds (or at most 5 seconds, e.g. 5 seconds). Additionally or alternatively, the second time period may be more than 10 seconds long, e.g. at least 15 seconds, at least 20 seconds, at least 25 seconds, at least 30 seconds, at least 45 seconds, at least 60 seconds, at least 120 seconds, or at least 300 seconds (e.g. 10 s, 15 s, 20 s, 25 s, 30 s, 45 s, 60 s, 120 s, 300 s), or an infinite amount of seconds (such that the second time interval never stops and ride requests are fixed only when they are immediate). For example, a duration of the second time period is a multiple of a duration of the first time period, e.g. 5 seconds for the first time interval and 20 or 30 seconds for the second time interval. In the following, the first time interval may be denoted absolute batching period, and the second time interval may be denoted effective batching period.

In at least some embodiments, the first time period and/or the second time period are relative to a current time, e.g. as rolling time windows, or based on a fixed time grid, where the time is divided into first time interval and second time intervals (e.g. a minute may have 12 5-seconds first time intervals from 0-5s, 5-10s etc. and/or two 30-seconds time intervals, e.g. from 0-30s, and 30-60s). In some embodiments, a mixed approach may be chosen, where the ride requests are accumulated during the first time interval and periodically, at the end of each first time interval, added to the metaheuristic iterative improvement algorithm, which may be continuously executed, such that the second time interval is (always) relative to a current time or relative to a time of the respective first time interval.

In embodiments, the ride requests are open for reassignments during the second time interval (if they are not assigned to an empty vehicle), and may be fixed thereafter. In other words, an assignment of a received ride request is fixed after the second time period. Additionally, a second ride request might not only be used to reassign ride requests received in the first time interval, but also ride requests that have been received in previous first time intervals. In other words, one or more ride requests received before the first time period and within the second time period may be available for reassignment in the execution of the metaheuristic iterative improvement algorithm.

The method comprises repeating 150 the assignment for a subsequent first time period (and a subsequent second time interval). In other words, each first time interval may be followed by a subsequent first time interval, and the respective method steps (e.g. accumulating 120 the ride requests and assigning 130 the ride requests) may be repeated for each first time interval. Accordingly, each second time interval may be followed by a subsequent second time interval, or the second time interval may be shifted along with the first time intervals, and the metaheuristic iterative improvement algorithm may be executed for the subsequent or shifted second time interval.

The one or more interfaces 12 may correspond to one or more inputs and/or outputs for receiving and/or transmitting information, which may be in digital (bit) values according to a specified code, within a module, between modules or between modules of different entities. For example, the one or more interface 12 may comprise interface circuitry configured to receive and/or transmit information.

In embodiments the one or more processing modules 14 may be implemented using one or more processing units, one or more processing devices, any means for processing, such as a processor, a computer or a programmable hardware component being operable with accordingly adapted software. In other words, the described function of the one or more processing modules 14 may as well be implemented in software, which is then executed on one or more programmable hardware components. Such hardware components may comprise a general purpose processor, a Digital Signal Processor (DSP), a micro-controller, etc.

In at least some embodiments, the one or more storage modules 16 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

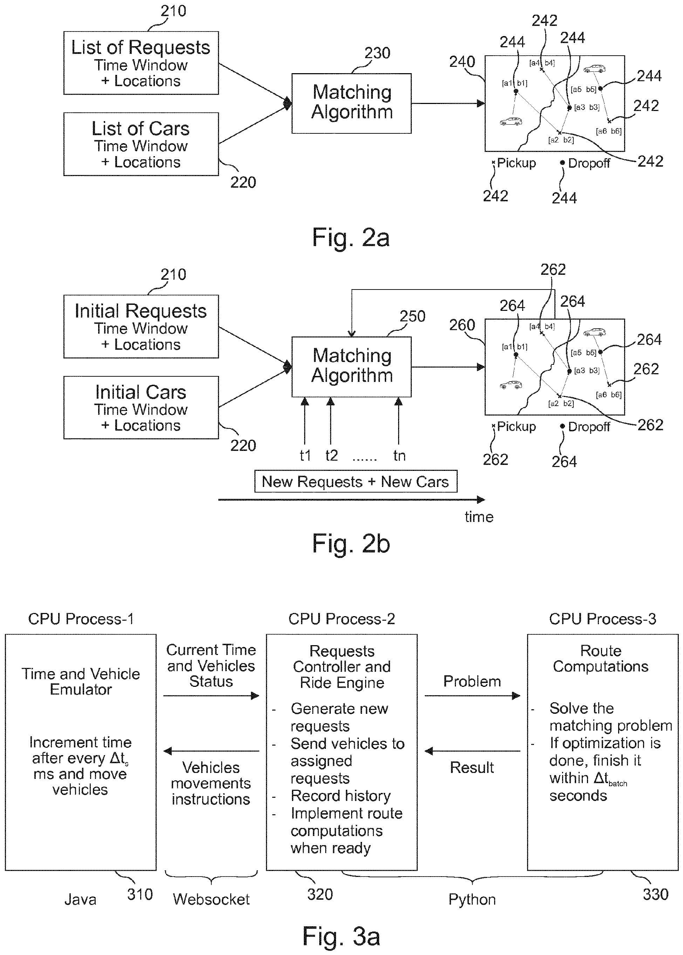

More details and aspects of the method, system and computer program are mentioned in connection with the proposed concept or one or more examples described above or below (e.g. Fig. 2a to 5). The method, system and computer program may comprise one or more additional optional features corresponding to one or more aspects of the proposed concept or one or more examples described above or below.

At least some embodiments relate to using effective batching periods for the dynamic matching problem in on demand mobility. Embodiments relate to the topic of building an improved and/or efficient algorithm for matching vehicles to passenger requests in On Demand Mobility (ODM) services, for example, in Ride-Hailing and Ride Sharing.

In recent years, there has been an increasing interest in addressing the vehicle matching problem in Ride Hailing (RH) services. The problem is closely related to the classical Dial a Ride Problem (DARP), for which various efficient metaheuristics exist in literature. Among these metaheuristics, the Adaptive Large Neighborhood Search (ALNS) algorithm has shown great results. At least some embodiments are focused on using Adaptive Large Neighborhood Search methodologies of DARP in an asynchronous real time framework, using only a limited time for optimization or improvement. The vehicle matching problem is similar to the dynamic DARP (new requests arrive dynamically). However, the majority of transportation studies that simulated RH services neither benefited from DARP procedures nor considered the asynchronous nature of real scenarios, i.e. the customers need quick responses and the vehicles keep moving while computing assignments. At least some embodiments provide an improved batching strategy, in which ALNS is adapted to reduce the batching period without compromising the solution quality but also can be used in realtime with good solutions.

DARP has wide application areas motivated by real life scenarios in multiple domains, ranging from airport services and elderly care to logistics and taxi services. Various exact methods and metaheuristics are found in literature for multiple variants of DARP. Generally, the exact methods are able to solve only small problem instances. For example, approaches based on Adaptive Large Neighborhood Search (ALNS), Variable Neighborhood Search (VNS), Genetic Algorithm (GA) and their Hybrids may be used for this purpose.

A strategy used for solving the general dynamic Vehicle Routing Problem (VRP), where the new customer requests are added dynamically to the system, is to use the methods already developed for the static problem in a "rolling horizon" fashion, as described in Toth, Paolo, and Daniele Vigo, eds: "Vehicle routing: problems, methods, and applications". In this strategy the customer requests over a fixed window of time are grouped together and then the optimization is called. This technique is generally referred to as "batching" in the ride hailing industry. In the context of the present disclosure, this technique is referred to as "absolute batching".

In general, the ride hailing problem may be seen as a static problem or as a dynamic problem. In a static problem, as shown in Fig. 2a, all locations and time windows are known at the start, and the matching is all done in one go. For example, a list of requests 210 (with corresponding time window and locations) and a list of cars 220 (with corresponding time window and locations is provided to a matching algorithm 230, to generate pickup 242 and dropoff 244 locations for the requests and vehicles, as shown in map 240. A static view might, however, not be suitable for real scenarios. In a dynamic problem, as shown in Fig. 2b, only few requests are known at start. New requests keep coming, i.e. there are dynamic new requests, such that the approach is applicable to real scenarios. In the matching, both a short notice and a short distance may be considered. For example, as in Fig. 2a, a list of requests 210 (with corresponding time window and locations) and a list of cars 220 (with corresponding time window and locations is provided to a matching algorithm 250, to generate pickup 262 and dropoff 264 locations for the requests and vehicles, as shown in map 260. Additionally, overtime, i.e. at different points in time $t_1$ ... $t_n$, new requests and new vehicles 270 are provided to the matching algorithm, and the previous solution represented by map 260 may be refined.

Batching is usually used in conjunction with traditional optimization techniques by ride hailing services. Often some metaheuristic or crude heuristic like assigning the nearest vehicle is used by ride hailing services for this purpose. This may provide a better vehicle assignment compared to immediate vehicle assignment without batching. However, using an absolute fixed batching period may limit the potential of these optimization techniques, and the computed solution to the dynamic vehicle matching problem may be significantly improved by introducing a new batching procedure according to embodiments.

The basic principle of at least some embodiments is that instead of using just a single long "absolute batching" period, two separate batching periods are used (i.e. based on the first and the second time period): one for actual batching of requests (absolute batching period, e.g. based on the first time interval), and another one for fixing the calculated assignment of requests to vehicles (e.g. based on the second time interval). We refer to the latter as "Effective Batching Period" (i.e. the second time interval). For example: If traditional batching of 30 seconds is used, then the customer requests may be accumulated for every 30 seconds, and the optimization procedure may be called after every 30 seconds. On the contrary, in embodiments, "Absolute Batching" of 10 seconds and "Effective Batching" of 30 seconds may be used, which means that the optimization may be called for every 10 seconds with the accumulated requests. However, the schedule of the requests are not "fixed" at the end of 10 seconds, rather the old request and the newly accumulated requests may be kept inside the optimization (using the current solution as initial solution) until the "Effective Batching" period of 30 seconds ends for the old requests. This way, even though the absolute batching is done for just 10 seconds, the optimizer may actually get more time for optimization. Additionally, the optimization (i.e. the initial assignment) may be applied to the new requests earlier than the traditional batching, which may improve the quality of the solution.

Consider a fleet V of size m and a set R of n requests. For an RH scenario, it may be assumed that each vehicle can serve only one request at a time. For each request $r \in R$, there is a pickup location $r_p$, a drop-off location $r_d$ and the time $t_r$ when the request wants to be picked up. The time it takes to travel from $r_p$ to $r_d$ is given as $T_r$. For each vehicle $v \in V$, let $P_v \subseteq R$ be a set of requests assigned to v, and $T_v$ be the total duration that v will take to serve the requests in $P_v$. It may be assumed that after serving all requests in $P_v$ the vehicle stays at the drop-off location of the last request. Let $d_{max}$ be a constant indicating the maximum delay allowed for picking up a request. Then, for each request r, the allowed pickup time window may be given as $[t_r, t_r + d_{max}]$. For each vehicle $v \in V$, let $A_{rv}$ be the vehicle arrival time at the pickup location of the request r. Note that it may be allowed for the vehicle to arrive at the pickup location of r before the start of r's time window, in which case v will have to wait until $t_r$. Therefore, the waiting time for v and the delay for the customer pickup may be be calculated as $wait_{rv} = max(0, t_r - A_{rv})$ and $delay_{rv} = max(0, Ar_v - t_r)$, respectively. Lastly, let $c_r$ be 0 if request r is not covered by any vehicle, otherwise 1. With the above notations, the multi-objective function for the matching problem may be given by formula (1):

$$\min \frac{\alpha}{m} \sum_{v \in V} T_v + \beta \frac{\sum_{v \in V} \sum_{r \in P_v} delay_{rv}}{1 + \sum_{r \in R} c_r} + \frac{\gamma}{n} \sum_{r \in R} (1 - c_r)$$

where the three terms represent the average amount of time traveled by vehicles, the average pickup delay of the served customers and the ratio of unserved customers, respectively. $\alpha$ and $\beta$ may be constant weights for the relative importance of the total travel time of all the vehicles and the total delay to the customers, respectively. $\gamma$ may be a relatively heavy weight for serving the maximum number of customer requests. In the formula, the first factor relates to the mean vehicle total travel time, the second factor relates to the mean delay per matched requests, and factor three relates to the percentage of unmatched requests. For example, the objective function may be used to evaluate different solutions, i.e. a quality of different solutions.

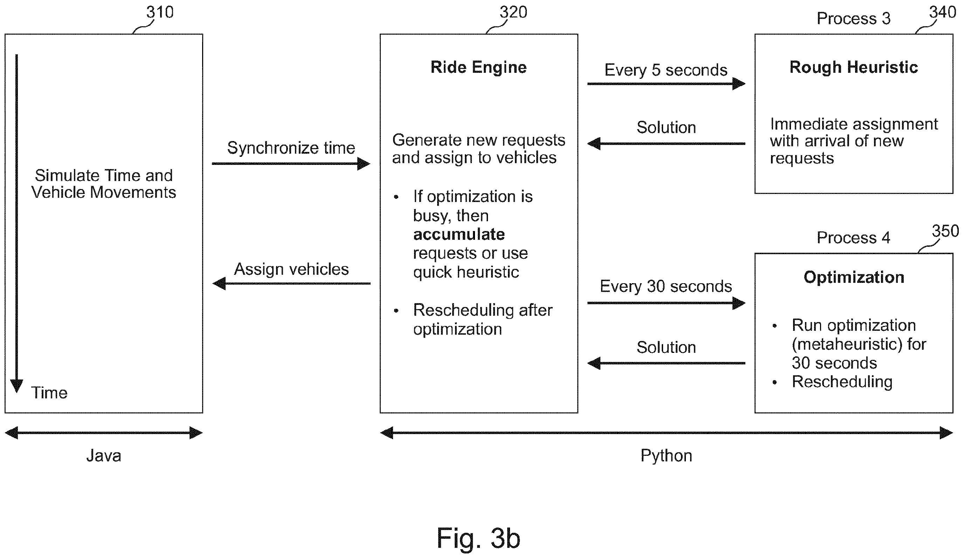

For simulating and evaluating the dynamic real time an RH scenario, the vehicle movements and the time increments are kept in a separate CPU process, as shown in Figs. 3a and 3b. This represents the real life time line for RH scenario, where the vehicles do not stop their movements for any computations by RH service providers. Similarly, the generation and handling of the requests, and the maintenance of scheduled plan for each vehicle is kept in an independent CPU process, which represents an RH service provider.

Fig. 3a shows a coarse schematic overview of a setup used for a simulation of some embodiments. A CPU (Central Processing Unit) process 1 310, implemented in Java, may be used as a time and vehicle emulator, which increments time after every $\Delta t$ ms and moves vehicles. The vehicle movements and emulation of real clock may be kept in a separate CPU process for keeping the time updates independent and light. A CPU process 2 320 receives a current time and vehicle status from CPU process 1 (via a web socket) and provides vehicle movement instructions to the CPI process 1 (via a web socket). The CPU process 2 is the requests controller and ride engine, which generates new requests, sends vehicles to assigned requests, determines a record history and implements route computations when ready. A further CPU process 3 330 receives a (routing) problem from CPU process 2, and provides a corresponding resolute back to CPU process 2. CPU process 3 is configured to provide the route computations, i.e. by solving the matching problem, and, if the optimization is done, finish it within $\Delta t_{batch}$ seconds. In the exemplary simulation environment, CPU process 2 and CPU process 3 are implemented using python.

Fig. 3b shows a more detailed schematic overview of a setup used for a simulation of embodiments. Process 1 310 is, again, used for simulating time and vehicle movement over time, and may be implemented using Java. Process 2 320 implements the ride engine, and generates new requests and assigns the new requests to vehicles. If the optimization is busy, the requests are accumulated or a quick heuristic is used. After optimization, rescheduling is performed. Time synchronization is provided from process 1 to process 2, and the assigned vehicles are provided from process 2 to process 1. Fig. 3b further shows a process 3 340, which implements a rough heuristic to provide an immediate assignment with an arrival of a new request. The rough heuristic may be triggered by the ride engine every 5 seconds, and a solution may be provided back to the ride engine. Every 30 seconds an optimization process 4 350 may be triggered, which may run an optimization (metaheuristic) for thirty seconds and perform rescheduling, and provide the solution to the ride hailing process. Again, processes 2 to 4 may be implemented using Python. In an exemplary implementation, the Open Source Routing Machine (OSRM) was used as a router.

For the evaluation, the requests were generated from NYC taxi data, with $t_r$, $r_p$, $r_d$ equal to the trip's start time, pickup and drop off locations, respectively. Every new request was generated $\Delta t_a$ minutes before $t_r$. Furthermore, in order to make the whole process non-blocking, the computations of vehicle routes were always done in a separate CPU process. This computation was tested with two different techniques: Nearest Neighbor Heuristic (NNH): Whenever there is a new request, it is assigned to the vehicle that after serving all the assigned requests could pick up the new request with the least pickup delay. The second approach is batch Optimization or improvement (Rolling Horizon): Whenever there is an unscheduled request, the optimization or improvement is called with a strict timeout limit of $\Delta t_{batch}$ seconds. In the meantime, when the optimizer is busy, the new requests are accumulated. This is equivalent of saying that the requests are batched for $\Delta t_{batch}$ seconds.

In at least some embodiments, a pairwise request-vehicle graph is used, which may be based on combining the ideas of forward time slack for VRPTW by Savelsbergh: "The vehicle routing problem with time windows: Minimizing route duration", and the RV graph by Alonso et al.: ""On-demand high-capacity ride-sharing via dynamic trip-vehicle assignment", a pairwise request vehicle (RV) directed graph may be computed, with negative and positive edges representing pairwise time slack and pickup delay, respectively. Consider a directed RV graph $G(N,E)$ with set $N = V \cup R$ as nodes and edges E defined as follows:

For a vehicle $v \in V$ and a request $r \in R$, the edge $(v,r) \in E$ if $T_{vr} + t_s - t_r \leq d_{max}$, with a weight $e = T_{vr} + t_s - tr$; where $T_{vr}$ is the traveling time from the vehicle location to the pickup point of $r$ and $t_s$ is the start time of the vehicle. This implies that starting from the current location, the vehicle can pick up the request with a delay less than $d_{max}$.

Similarly for two requests $r_1$ and $r_2$, the edge $(r_1,r_2) \in E$ with weight $e = Tr1r2 + Tr1 + tr1 - tr2$, if $Tr1r2 + T_{r1} + t_{r1} - t_{r2} \leq d_{max}$; where $T_{r1}$ is the travel time from pickup to drop-off location of $r_1$ and $T_{r_{1r2}}$ is the distance from drop-off of $r_1$ to pickup of $r2$ (and vice versa for edge $(r_2,r_1) \in E$). This means that an imaginary vehicle starting at the pickup point of $r_1$ drops off $r_1$ first, and then goes and picks up $r2$ such that the delay for picking up $r2$ is less than $d_{max}$.

The graph may be calculated before optimizing or improving the batched requests. It may be used for inserting new requests into a vehicle's path. If the request does not have an edge in G with the node before and after it (in case it is inserted in the middle of an existing route), then it cannot be inserted into the route. If the edges exist, then the accumulated forward time slack is used to make sure that the insertion will not delay any request after the insertion point more than $d_{max}$.

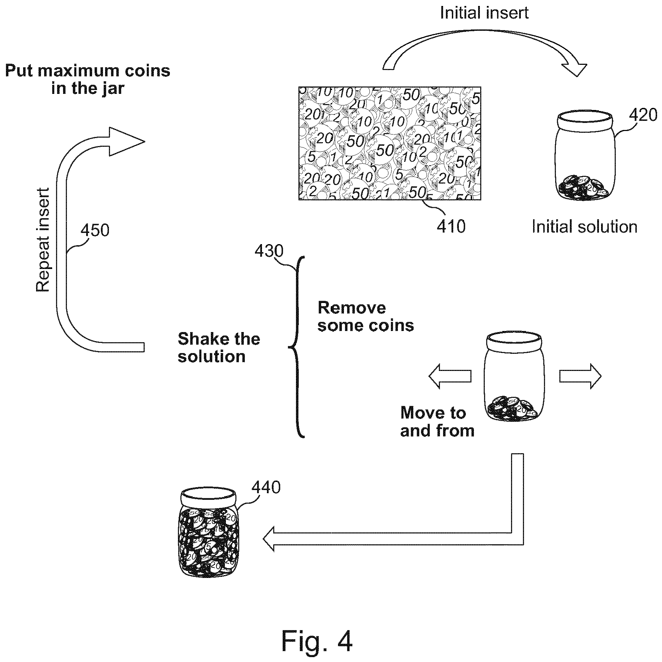

At least some embodiments are based on the Adaptive Large Neighborhood Search (ALNS) optimization/improvement algorithm. At least some embodiments are based on using Adaptive Large Neighborhood Search (ALNS). In ALNS, an initial solution is built, the solution is "shaken", and the two above steps are repeated until a stopping condition is fulfilled. For example, ALNS may be visualized using the problem of putting a maximum number of coins into a jar. Fig. 4 shows an example of an application of the Adaptive Large Neighborhood Search. In Fig. 4, an initial solution 420 is built by inserting an initial amount of coins 410 into a glass. In a shaking phase 430, some coins are removed, and the glass is moved to and fro, so a new solution 440 is generated. This new solution 440 may be used as a starting point for the next iteration, in which the insertion of new coins is repeated 450.

When ALNS is used for the Vehicle Routing Problem, new requests may be inserted, some requests may be removed (in the shake phase), and the above steps are repeated until a stopping condition is reached. In ALNS, the insertion and removal operators determine solution quality. ALNS may be used as it has emerged as a promising method for the Dial a Ride Problem and it is simple and effective. ALNS is, on the other hand, previously unused in ride hailing dynamic simulations.

Compared to local search heuristics that do small changes to the solution for exploring its neighborhood an LNS tries to explore such a large neighborhood of the solution that cannot be explored explicitly. This increases the computation time, but with a single iteration, a large number of requests can be rearranged. This is achieved by removing q percent requests in each iteration, and reinserting them back into the solution using various removal and insertion operators respectively. In embodiments, the operators used by Ropke and Pisinger in "An adaptive large neighborhood search heuristic for the pickup and delivery problem with time windows" may be used, which are described with their associated changes as follows:

1) Basic Greedy Insertion: The greedy heuristic tries to insert the request at the position that would increase the overall objective cost the least. Let $\Delta f_{rv}$ represent the incremental objective cost for request r when inserted at its best location in vehicle v. If some request cannot be inserted in v, $\Delta f_{rv}$ is $\infty$. Then, $c_r = \min_{v \in V}\{\Delta f_{rv}\}$ is the incremental cost of inserting r at its best position among all the routes. The heuristic may insert the request that has minimum $c_r$ at its best location. Since only one request is inserted at a time, the insertion costs may be recalculated for only one vehicle.

2) K-Regret Insertion: K-Regret heuristic may try to insert the requests by sort of looking into the future. It may insert the request that would regret the most if not inserted in the current iteration. With $c_r$ as defined in the previous section, let $c_r^k$ be be the incremental cost of inserting r at the overall kth best place among all vehicles. Then, among a set U of unmatched requests, K-Regret heuristic may insert r that has a maximal $\sum_{j=1}^{K} c_r^j - c_r^1$. Note that with $K = 2$, the regret is simply the difference between the least and the second least incremental costs. In the examination of embodiments, 2, 3 and m regret heuristics were used, where m (number of vehicles) simply means the regret is calculated using the maximum number of possible routes.

3) *Worst Removal:* Let $\Delta f_r$ represent the decrement in the objective cost when request *r* is removed from the solution. Then, from the group of requests *M* that are present in the solution, the worst removal may remove the request that maximizes the $\max_{r \in M}\{\Delta f_r\}$, i.e. it may remove the "worst" request from the solution.

4) *Shaw Removal:* The shaw removal may try to remove the requests that are similar. More similar requests may result in higher chances that they could be easily shuffled, leading to new, and possibly, better solutions. The similarity between two requests $r_i$ and $r_j$ may calculated through a *relatedness measure, S(r_i,r_j)* which in our case also benefits from RV graph. It may be given by formula (2):

$$S(r_i, r_j) = \psi\left(\frac{|t_{\{r_i\}} - t_{\{r_j\}}|}{min\left(t_{\{r_i\}}, t_{\{r_j\}}\right)} + \frac{|T_{\{r_i\}} - T_{\{r_j\}}|}{min\left(T_{\{r_i\}}, T_{\{r_j\}}\right)}\right) + \omega\frac{|deg(r_i) - deg(r_j)|}{max\left(deg(r_i), deg(r_j)\right) + 1}$$

where deg(.) denotes the degree of the request node in the RV graph, and $\psi, \omega \in [0,1]$ are constant weights; the rest of the variables are as defined in section I-B. In (2), the first term looks at the temporal similarity between requests, while the second term considers the similarity in the potential number of other nodes in RV graph that the request could be combined with.

*5) Random Removal:* Random removal may simply remove the intended number of requests from the solution randomly. With the Shaw and Worst removal heuristics, the parameter $p \geq 1$ may be used, as suggested by Ropke, for the degree of randomization. The lower the $p$ is, the more random the removal operator gets. Similarly, as the insertion operators are purely deterministic, some noise $z \in [-N_{max}, N_{max}]$ may be used in order to bring variety to the insertions, such that the modified increment cost is given as $\Delta f' = \Delta f + z$. $N_{max}$ may be selected using the increment in the first term of (1), i.e. $N_{max} = \eta \alpha \Delta T_v / n$, where $\eta$ is a constant factor for controlling the amount of noise.

Furthermore, at least some embodiments may use an adaptive scheme for LNS Heuristics and insertion noise. For each of the presented heuristic and the decision for using insertion noise or not, a weight may be assigned and a roulette wheel principle may be used for selection. A heuristic $j$ with weight $w_j$ may be selected with the probability shown in formula (3):

$$\frac{w_j}{\sum_{i=1}^{k_h} w_i}$$

where $k_h$ is the total number of heuristics. All the three selections, i.e. removal, insertion and noise decision, may be made independently. The individual weights may be adopted according to their recent performance as follows:

At the start of simulation, all the weights may be set to one. Each batch optimization or improvement call may be divided into segments of 100 iterations. During each segment, everyone may be assigned scores according to their performance. For example, the same scoring strategy as in Ropke and Pisinger may be used. At the start of each segment, (all) the heuristics may be assigned a score of zero, which may be incremented by $\sigma_1$, $\sigma_2$ or $\sigma_3$ if the last iteration resulted in:

1) $\sigma_1$ : a new best solution.
2) $\sigma_2$ : an accepted solution that is better than the last solution.
3) $\sigma_3$ : an accepted solution that is worse than the last solution.

At the end of segment $j$, the new weight $w_i$ for the segment $j + 1$ may be selected as:

$$w_i^{j+1} = w_i^j \left( 1 - r_f \right) + r_f \frac{\zeta_i}{\theta_i}$$

Embodiments may further provide an acceptance criteria. Following the approach of Ropke and Pisinger, we follow simulated annealing acceptance criterion to avoid getting trapped in a local minimum solution. A solution $\hat{s}$ may be accepted with a probability of $e^{-\frac{f(\hat{s}) - f(s)}{T}}$, where s is the current solution, $f$ is the objective function and $T > 0$ is the *temperature*. The initial temperature $T_{initial}$ may be selected such that a solution being $w$ percent worse than the initial solution may be selected with 0.5 probability. For the calculation of the initial temperature, $\gamma$ may be set to zero in (1). In each iteration the temperature may decreases by a constant rate $c \in (0,1)$.

At least some embodiments may further provide realtime dynamic matching using ALNS. As described above, the optimization or improvement may be called with a strict timeout limit of $\Delta t_{batch}$ seconds. Some RH services may use a $\Delta t_{batch}$ of 30 seconds. While such a strategy certainly gives more time for optimization or improvement, it has a downside of delaying the involvement of new requests into optimization or improvement by at least $\Delta t_{batch}$, which may deteriorate the overall solution. On the contrary it might also not be practical to trigger an optimization or improvement every time there is a new request as such a strategy might not give enough time for finding a better solution. Therefore, at least some embodiments are based on using the concept of *Effective Batching Period* (i.e. the second time period), which may be defined as $\Delta t_{eff} = h \Delta t_{batch}$ (with $\Delta t_{batch}$ being the first time interval) where $h \in \mathbb{Z} > 0,$ which corresponds to the maximum amount of time allowed to modify the decision of a request after its announcement to the system. A $\Delta t_{ff} = \Delta t_{batch}$ would mean that accumulated requests are optimized only once by the system, after which their schedule is fixed. This is equivalent to the traditional batching strategy. On the contrary, $\Delta t_{eff} = \infty$ would mean that the system can include the already computed requested inside the optimization or improvement as many times as possible, and thus, gives the optimizer maximum opportunity to find a better solution. Furthermore, $\Delta t_{batch} < \Delta t_{eff} < \infty$ may mean that the optimizer gets more time for optimization or improvement and the new requests are included earlier. For example, for $\Delta t_{batch}$ = 5 sec and $\Delta t_{eff}$= 30 sec, even though the actual batching period is small, the optimizer/improver "effectively" gets 30 sec for improving the requests. Alternatively, the strategy can also be seen as a window of constant size sliding over time, making the schedules *fixed.* Note that in the above strategy, (only) the *scheduled* or *follow-up* requests that the vehicle is supposed to serve next might be considered. The requests assigned to empty vehicles, that are not serving anyone at the moment, in a batch solution may be already considered *fixed.*

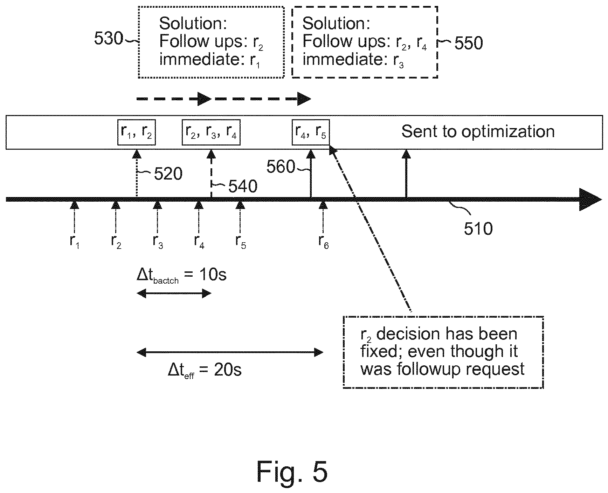

Fig. 5 shows a schematic overview of an absolute and an effective batching period. The absolute batching period may be the period of accumulation before the new requests are optimized. It can also be denoted "Requests Update Period". The effective batching period, on the other hand, may be the amount of time after which followup requests schedule is fixed. It the effective batching period is set to infinity, the follow up requests may be optimized/improved until they become immediate. In other systems, there may be no differentiation between an absolute batching period and an effective batching periods, i.e. both periods may be equal. In this case, new requests may be added after accumulation period. When the ALNS algorithm is used for dynamic matching, the previous solution may be used as initial solution, and new requests may be considered as requests that were removed in the last iteration.

In Fig. 5, some vehicles may be empty, allowing for immediate assignments, and some may already serve customers. Over time 510, ride requests r1 to r6 are received. $\Delta t_{batch}$ is set to 10 s, and $\Delta t_{eff}$ is set to twenty seconds. Requests $r_1$ and $r_2$ are sent 520 to optimization/improvement 530 together, with an immediate solution being found for $r_1$, and $r_2$ being reconsidered in a subsequent follow-up round. In the mean time, $r_3$ and $r_4$ are sent 540 to optimization, such that $r_2$, $r_3$ and $r_4$ are being optimized together. In this case, there is an immediate assignment for $r_3$, and $r_2$ and $r_4$ are scheduled for being reconsidered in a subsequent follow-up round. As $\Delta t_{eff}$ has lapsed by the time for the next follow up, the $r_2$ decision is fixed, even though it was considered as follow up request, such that in the next optimization round 550, only $r_4$ and the newly added 560 $r_5$ are considered for optimization.

The above strategy is specially useful for ALNS, as it aligns with its fundamental approach. It may start with the last batch solution and consider the new requests as the ones removed in the last iteration of ALNS. It may be quickly accommodate the new requests inside the optimization or improvement; thus, the earlier inclusion of new requests may help in finding a better solution.

The approach taken in embodiments were evaluated in a real time simulation environment. For embodiments, an evaluation was performed using New York taxi data, with various percentages for increasing complexity - 5, 10 and 20 percent. It was shown that using the traditional batching technique i.e. $\Delta t_{batch}$ = $\Delta t_{eff}$ with ALNS leads to better solutions than NNH. The solution quality improves further as $\Delta t_{batch}$ increases, as the system accumulates more requests. However, since the optimizer has only $\Delta t_{batch}$ for improving or optimizing the accumulated requests and the new requests are included into optimization or improvement after at least $\Delta t_{batch}$, the solution quality might only be improved up to a certain limit. Such an effect is a better representation of reality, in contrast to a synchronous simulation where the emulated time is stopped for batch optimization or improvement. Therefore, the real time asynchronous frameworks may be used as the target for evaluating the performance of matching algorithms for RH. Using smaller $\Delta t_{batch}$ and larger $\Delta t_{eff}$ considers the new requests earlier into optimization. This may improve the batching solution of a real time use case. For example, in the evaluation, for $\Delta t_{eff}$ = 30s the solution of a smaller batching period $\Delta t_{batch}$ of 5 and 10s served more customers than $\Delta t_{batch}$ of 30s even though with smaller $\Delta t_{batch}$ a smaller number of ALNS iterations may be computed. The evaluation showed, that Increasing effective batching $\Delta t_{eff}$ for the same absolute batching $\Delta t_{batch}$ increases solution quality. This clearly shows an advantage over the strategy of fixed 30s batching. Compared to traditional batching i.e. when $\Delta t_{batch}$=$\Delta t_{eff}$, using smaller $\Delta t_{batch}$ for the same $\Delta t_{eff}$ performed better. Furthermore, as $\Delta t_{eff}$ increases, the solution may get better, right up to $\infty$ where the best solution possible in real time is achieved with ALNS, i.e. serving almost 13 percent more customers with a mean pickup delay of 3 min compared to mean delay of 4.1 min using NNH. Even with $\Delta t_{eff}$ = $\infty$, the solutions for smaller $\Delta t_{batch}$ than 30s are actually better. This is because with larger $\Delta t_{batch}$ the old and the new requests are optimized together less number of times than with smaller $\Delta t_{batch}$. The solutions with $\Delta t_{eff}$= $\infty$ may be difficult to achieve in an actual RH application, as this may increase the response time to customers. However, similar results may be reached in a shorter time using other techniques, such as vehicle reallocation, demand prediction and using less iterations with increasing effective batching. An increasing number of vehicles lowers average distance between vehicles and requests, such that the NNH (the "greedy" algorithm) converges to batching solution. NNH gives less mean delay when vehicles are in abundance, and the solution with $\Delta t_{eff}$=$\infty$ gets closer to NNH (but there might not be many followup requests to optimize).

The evaluation was performed for NNH and for ALNS with $\Delta t_{batch}$ = 30, 10, 5s and $\Delta t_{eff}$ = 30s and $\Delta t_{eff}$= $\infty$, with different numbers of vehicles (50, 100, 150 and 200), and different numbers of requests (5%, 10% and 20% of the NY taxi dataset). Only batching strategies that are practical in reality i.e., except one $\Delta t_{eff}$ = $\infty$ which was include to compare the best possible solution, were compared. The percentage of unserved requests and the mean delay were evaluated. The results showed that using ALNS in real time with a traditional batching of 30s provides better solutions than NNH. However, when combined with the strategy of shorter batching periods, the solutions improved further. The improvement is especially visible for the busiest scenario of RH i.e. with 20 percent NYC data. When vehicles are in abundance, the performance of NNH is almost similar to the optimized solution. Furthermore, the number of iterations per $\Delta t_{batch}$ were evaluated, which ranged from approx. 10000 for $\Delta t_{batch}$ = 30s $\Delta t_{eff}$ = 30s at 50 vehicles and 5% of NYC data (appro.. 3500 for $\Delta t_{batch}$ = 10s, approx. 2000 for $\Delta t_{batch}$ = 5s, and approx. 1000 for $\Delta t_{batch}$ = 5s $\Delta t_{eff}$= ∞) to approx. 2500 for $\Delta t_{batch}$ = 30s $\Delta t_{eff}$ = 30s at 200 vehicles and 20% of NYC data (other configurations at similar proportional factors), with the number of vehicles being increased leading to a marked reduction in iterations and the number of requests increased having little impact.

Solutions similar to $\Delta t_{eff}$ = ∞ or even a better solution might be calculated in a synchronous environment. Such synchronous simulation results might be beneficial for showing the potential RH market in a region. However, for practical use, the most important question is the solution quality when given only a limited time for optimization or improvement, which was evaluated for embodiments.

In conclusion, ALNS was used within a realtime simulation framework for the ride matching problem in RH. Embodiments may show that introducing the new requests inside the optimization or improvement problem earlier significantly improves the overall service quality. Embodiments thus provide the idea of Effective Batching Period for ALNS, where the actual batching period is kept small but the decisions for individual requests are delayed till the end of effective batching period. Evaluation results show that such a strategy combined with ALNS can remarkably improve the real time solution quality for RH. The results show that it can be used for realtime applications. Furthermore, different batching strategies were evaluated and it was concluded that introducing new requests earlier to ALNS for optimization or improvement can significantly improve the overall solution quality. The approach can be combined with the prediction of future customer demand for improving the solutions further. Additionally, the approach may be scaled for bigger problems by dividing the operation area into smaller regions and calling ALNS in parallel.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A computer-implemented method for assigning a plurality of ride requests to a plurality of vehicles, the method comprising:

   receiving (110) ride requests of the plurality of ride requests in a continuous manner;
   accumulating (120) the ride requests that were received in a first time period;
   assigning (130) the ride requests that were received in the first time period to the plurality of vehicles using a rough heuristic;
   executing (140) a metaheuristic iterative improvement algorithm to reassign ride requests that were received in a second time period to the plurality of vehicles, wherein the second time period comprises the first time period and wherein the second time period is longer than the first time period; and
   repeating (150) the assignment for a subsequent first time period.

2. The method according to claim 1, wherein the metaheuristic iterative improvement algorithm is based on reassigning ride requests that were received in the second time period to the plurality of vehicles based on an objective evaluation function.

3. The method according to claim 2, wherein the objective evaluation function is based on at least one of a mean vehicle total travel time, a mean delay per assigned ride request and a percentage of unassigned ride requests.

4. The method according to one of the claims 1 to 3, wherein executing (140) the metaheuristic iterative improvement algorithm comprises generating (142) a plurality of solutions by repeatedly generating a new solution by adding and removing ride requests to and from a previous solution, and evaluating (144) the plurality of solutions based on an objective evaluation function, wherein the reassignment of the ride requests is performed by choosing a solution of the plurality of solutions based on the evaluation of the plurality of solutions.

5. The method according to claim 4, wherein the metaheuristic iterative improvement algorithm iterates a pre-defined number of times during an execution of the metaheuristic iterative improvement algorithm.

6. The method according to one of the claims 4 or 5, wherein the method comprises storing (146) one or more ride requests that have been removed from the chosen solution, wherein the chosen solution is used as an initial solution for a subsequent execution of the metaheuristic iterative improvement algorithm, and wherein ride requests that were received in the subsequent first time period are added together with the one or more ride requests that have been removed from the chosen solution to the initial solution in the subsequent execution of the metaheuristic iterative improvement algorithm.

7. The method according to one of the claims 4 to 6, wherein the metaheuristic iterative improvement algorithm is based on an adaptive large neighborhood search.

8. The method according to one of the claims 1 to 7, wherein the first time period is at most 10 seconds long, and/or wherein the second time period is more than 10 seconds long.

9. The method according to one of the claims 1 to 8, wherein a duration of the second time period is a multiple of a duration of the first time period.

10. The method according to one of the claims 1 to 9, wherein the first time period and the second time period are relative to a current time,
and/or wherein the first time period and the second time period are rolling time windows.

11. The method according to one of the claims 1 to 10, wherein an assignment of a received ride request is fixed after the second time period.

12. The method according to one of the claims 1 to 11, wherein one or more ride requests received before the first time period and within the second time period are available for reassignment in the execution of the metaheuristic iterative improvement algorithm.

13. The method according to one of the claims 1 to 12, wherein the plurality of ride requests are a plurality of ride requests of a ride hailing system and the plurality of vehicles are a plurality of ride hailing vehicles,
or wherein the plurality of ride requests are a plurality of ride requests of a ride sharing system and the plurality of vehicles are a plurality of ride sharing vehicles.

14. A computer program having a program code for performing the method according to one of the claims 1 to 13, when the computer program is executed on a computer, a processor, or a programmable hardware component.

15. A system (100) comprising one or more interfaces (12) and one or more processing modules (14), wherein the system is configured to:

receive ride requests of the plurality of ride requests via the one or more interfaces in a continuous manner,
accumulate the ride requests that were received in a first time period,
assign the ride requests that were received in the first time period to the plurality of vehicles using a rough heuristic,
execute a metaheuristic iterative improvement algorithm to reassign ride requests that were received in a second time period to the plurality of vehicles, wherein the second time period comprises the first time period and wherein the second time period is longer than the first time period, and
repeat the assignment for a subsequent first time period.

| RECEIVING RIDE REQUESTS |
| --- |

110

| ACCUMULATING THE RIDE REQUESTS |
| --- |

120

| ASSIGNING THE RIDE REQUESTS |
| --- |

130

| EXECUTING A METAHEURISTIC IMPROVEMENT ALGORITHM |
| --- |

140

| REPATING THE ASSIGNMENT |
| --- |

150

Fig. 1a

| RECEIVING RIDE REQUESTS |
| --- |

110

| ACCUMULATING THE RIDE REQUESTS |
| --- |

120

| ASSIGNING THE RIDE REQUESTS |
| --- |

130

| EXECUTING A METAHEURISTIC IMPROVEMENT ALGORITHM |
| --- |

140

| GENERATING A PLURALITY OF SOLUTIONS |
| --- |

142

| EVALUATING THE PLURALITY OF SOLUTIONS |
| --- |

143

| STORING ONE OR MORE RIDE REQUESTS |
| --- |

144

| REPATING THE ASSIGNMENT |
| --- |

150

Fig. 1b

RIDE REQUESTS

| INTERFACE |
| --- |
| PROCESSING MODULE |

12

| STORAGE MODULE |
| --- |

14

16

100

Fig. 1c

Fig. 2a

Fig. 2b

Fig. 3a

340 — Process 3

**Rough Heuristic**

Immediate assignment with arrival of new requests

350 — Process 4

**Optimization**

- Run optimization (metaheuristic) for 30 seconds
- Rescheduling

Every 5 seconds

Solution

Every 30 seconds

Solution

Python

320

**Ride Engine**

Generate new requests and assign to vehicles

- If optimization is busy, then **accumulate** requests or use quick heuristic
- Rescheduling after optimization

Synchronize time

Assign vehicles

310

Simulate Time and Vehicle Movements

Time

Java

Fig. 3b

Initial insert

**Put maximum coins
in the jar**

420

Repeat insert

450

410    Initial solution

430

**Remove
some coins**

**Shake the
solution**

**Move to
and from**

440

Fig. 4

530 — Solution:
Follow ups: $r_2$
immediate: $r_1$

Solution:
Follow ups: $r_2$, $r_4$ — 550
immediate: $r_3$

| $r_1$, $r_2$ | $r_2$, $r_3$, $r_4$ | $r_4$, $r_5$ | Sent to optimization |

520

540

560

510

$r_1$  $r_2$  $r_3$  $r_4$  $r_5$  $r_6$

$\Delta t_{batch} = 10s$

$\Delta t_{eff} = 20s$

$r_2$ decision has been fixed; even though it was followup request

Fig. 5

| | Europäisches Patentamt |
|---|---|
| | European Patent Office |
| | Office européen des brevets |

## EUROPEAN SEARCH REPORT

**Application Number**

EP 19 20 1659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/315148 A1 (LUO JIANZHE [US] ET AL) 1 November 2018 (2018-11-01) * the whole document * ----- | 1-15 | INV. G06Q10/04 ADD. G06Q50/30 |
| A | ARSLAN ALI SYED ET AL: "Neural Network-Based Metaheuristic Parameterization with Application to the Vehicle Matching Problem in Ride-Hailing Services", TRANSPORTATION RESEARCH RECORD., 16 May 2019 (2019-05-16), XP055624542, US ISSN: 0361-1981, DOI: 10.1177/0361198119846099 * the whole document * ----- | 1-15 | |

|  |  |
|---|---|
| | TECHNICAL FIELDS SEARCHED (IPC) |
| | G06Q |

The present search report has been drawn up for all claims

| Place of search | Date of completion of the search | Examiner |
|---|---|---|
| Munich | 15 January 2020 | Abdel Jaber, Wael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 20 1659

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2020

| Patent document cited in search report | Publication date | Patent family member(s) | Publication date |
|---|---|---|---|
| US 2018315148 A1 | 01-11-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HO et al.** *A survey of dial-a-ride problems: Literature review and recent developments,* 2018